# EUROPEAN PATENT SPECIFICATION

(11) **EP 4 254 603 B1**
(45) Date of publication and mention of the grant of the patent: **01.04.2026**
(21) Application number: 21916988.5
(22) Date of filing: 13.05.2021
(51) Int. Cl.: H01M 10/613, H01M 10/617, H01M 10/625, H01M 10/6554, H01M 10/6556, H01M 10/6568, H01M 10/653, H01M 10/658, H01M 50/204, H01M 50/249, H01M 50/258

(54) **BATTERY PACK AND VEHICLE**
BATTERIEPACK UND FAHRZEUG
BLOC-BATTERIE ET VÉHICULE

(30) Priority: 07.01.2021 CN 202110018493
(43) Date of publication of application: 04.10.2023
(73) Proprietor: BYD Company Limited, Shenzhen, Guangdong 518118 (CN)
(72) Inventor: FENG, Jiamao, Shenzhen, Guangdong 518118 (CN); LU, Zhipei, Shenzhen, Guangdong 518118 (CN); XU, Huabing, Shenzhen, Guangdong 518118 (CN); LI, Huabiao, Shenzhen, Guangdong 518118 (CN)
(74) Representative: Dehns Germany Partnerschaft mbB
(86) International application number: PCT/CN2021/093712
(87) International publication number: WO 2022/147938

(56) References cited:
- EP-A1- 2 851 991
- CN-A- 108 735 946
- CN-A- 111 525 213
- CN-A- 111 864 309
- CN-U- 211 879 557
- JP-A- 2014 216 298
- JP-A1- WO2013 171 885

## Description

### FIELD

The present invention relates to the technical field of new energy vehicles, and specifically to a battery pack, and a vehicle.

### BACKGROUND

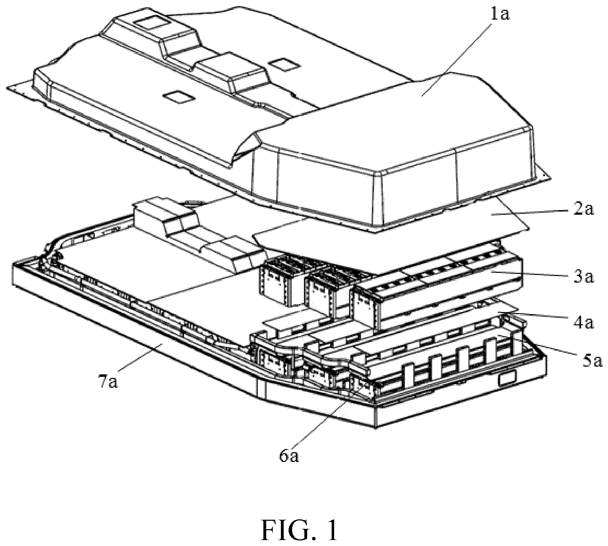

As shown in FIG. 1, an existing battery pack structure with a thermal management system includes sequentially, from top to bottom, in a height direction: sealing cover 1a-fireproof and heat-insulating cotton 2a-battery module 3a-thermally conductive adhesive 4a-liquid cooling plate 5a-polyurethane (PU) heat insulating plate 6a-tray 7a. An upper surface of the battery module 3a enables heat insulation and fire proofness against the sealing cover 1a through the fireproof and heat-insulating cotton 2a. The fireproof and heat-insulating cotton 2a generally has a thermal conductivity of about 0.02 W/(m K), and thus a good heat-temperature resistance. The thermally conductive adhesive 4a is filled between the battery module 3a and the liquid cooling plate 5a. The thermally conductive adhesive 4a is a single substance that is evenly coated on the bottom of the battery module 3a, and the thermally conductive adhesive 4a has only the function of heat conduction and no structural strength. The liquid cooling plate 5a has a harmonica tube-like structure, where a manifold structure requires a space reserved between the battery module 3a and the tray 7a. The PU heat insulating plate 6a is interposed between the liquid cooling plate 5a and the tray 7a, and serves to reduce the heat transfer loss of the liquid cooling plate 5a to the tray 7a and support the liquid cooling plate 5a. The battery module 3a is fixed on a transverse beam of the tray 7a by a flanged face on a side plate of the module, where the transverse beam of the tray 7a is a main heat transfer approach of the battery module 3a to the tray 7a.

In the existing battery pack structure, the battery module 3a and the tray 7a are not so closely attached, leaving a large heat insulating distance. Therefore, the temperature field of the battery module 3a is less affected by the ambient environment, and the heat load between different battery modules 3a and different areas is relatively in balance.

However, the existing battery pack structure has the following disadvantages:
(1) less compact space utilization, causing a low space utilization rate, a large free volume, and risk of excessive condensation points;
(2) excessive thermal management components and low degree of integration, which are not conducive to the reduction of cost; and
(3) no consideration of the heat load difference between different battery modules and different sites, which are not conducive to the control of the temperature difference in the battery pack, the improvement of the low-temperature performance of the battery pack, and the further obtaining of a more compact battery pack. CN 111 525 213 A discloses a power battery pack and a housing, which comprises a heat conducting plate, which comprises an upper and a lower heat conducting plate, the lower heat conducting plate being provided with a channel-shaped recess portion, the upper heat conducting plate being arranged above the lower heat conducting plate and cooperating with the channel-shaped recess portion to form a flow channel of a cooling liquid. The flow channel comprises main water intake flow channels extending in a central direction of the heat conducting plate, main water return flow channels arranged on two side edges of the heat conducting plate parallel to the central axis direction, and several main heat exchange flow channels connecting the main water intake flow channels and the main water return flow channels. CN 111 864 309 A discloses a similar system. JP 2014-216298 A discloses another construction of a heat conducting plate to be used with a battery pack. EP 2 851 991 A1 discloses a battery module structure in which heat transfer between a coolant and a coolant plate is performed by a coolant channel, which turns the flowing direction of coolant in different channel parts.

### SUMMARY

The present invention is intended to solve the following technical problems: In view of the problem that the existing battery pack structure with a thermal management system is not conductive to the control of the temperature difference in the battery pack, a battery pack and a vehicle are provided.

To solve the above technical problems, in an aspect, the present invention provides a battery pack according to claim 1, which includes: a liquid cooling plate, and a battery stack.

The liquid cooling plate includes a liquid cooling plate body, a liquid inlet and a liquid outlet. The liquid cooling plate body is internally provided with a liquid cooling circuit, which includes a peripheral liquid inflow channel, an effluent liquid collecting channel, and an intermediate channel communicating between the peripheral liquid inflow channel and the effluent liquid collecting channel. The liquid inlet is connected onto the liquid cooling plate body and communicates with the peripheral liquid inflow channel. The liquid outlet is connected onto the liquid cooling plate body and communicates with the effluent liquid collecting channel.

The peripheral liquid inflow channel encircles an edge of the liquid cooling plate body and covers an edge of a top surface of the battery stack. The intermediate channel is located at an inner side of the peripheral liquid inflow channel and covers a middle area of the top surface of the battery stack.

The intermediate channel includes multiple branch channels. An inlet of each of the branch channels communicates with the peripheral liquid inflow channel, and an outlet of each of the branch channels communicates with the effluent liquid collecting channel. The inlets of the multiple branch channels are arranged at intervals along the peripheral liquid inflow channel, and the outlets of the multiple branch channels are arranged at intervals along the effluent liquid collecting channel.

The battery module includes multiple battery cores stacked in a front-rear direction of a vehicle. The multiple branch channels extend in the front-rear direction of the vehicle.

The liquid inlet is connected to a front side of the liquid cooling plate body. The peripheral liquid inflow channel is bifurcated at the position of the liquid inlet to form a left peripheral liquid inflow channel and a right peripheral liquid inflow channel. Rear sides of the left peripheral liquid inflow channel and the right peripheral liquid inflow channel communicate with the inlets of the multiple branch channels. The effluent liquid collecting channel is located at the front side of the liquid cooling plate body and is spaced apart from the peripheral liquid inflow channel.

A cooling liquid is bifurcated after being fed via the liquid inlet and then flows through the left peripheral liquid inflow channel and the right peripheral liquid inflow channel. The cooling liquid is subsequently combined at the rear side of the left peripheral liquid inflow channel and the right peripheral liquid inflow channel, then flows through the multiple branch channels into the effluent liquid collecting channel, and flows out from the liquid outlet.

Optionally, the battery pack further includes a thermally conductive structural adhesive, a bottom structural adhesive and a tray. The liquid cooling plate, the thermally conductive structural adhesive, the battery stack, the bottom structural adhesive and the tray are stacked sequentially from top to bottom.

The tray includes a square frame, a front anti-expansion beam arranged on a front frame of the square frame, and a rear anti-expansion beam arranged on a rear frame of the square frame. A front end face of the battery stack is spaced apart from the front anti-expansion beam by a buffer layer capable of absorbing the expansion of the battery core. A rear end face of the battery stack is spaced apart from the rear anti-expansion beam by a buffer layer capable of absorbing the expansion of the battery core.

Optionally, the thermally conductive structural adhesive includes a front-flow-path structural adhesive and a rear-flow-path highly thermally conductive structural adhesive arranged in a front-rear direction. The front-flow-path structural adhesive and the rear-flow-path highly thermally conductive structural adhesive are bonded between the top surface of the battery stack and a bottom surface of the liquid cooling plate body. The coefficient of thermal conductivity of the front-flow-path structural adhesive is smaller than that of the rear-flow-path highly thermally conductive structural adhesive.

Alternatively, the battery module according to the present invention includes multiple battery cores stacked in a left-right direction of a vehicle. The multiple branch channels extend in the left-right direction of the vehicle.

The liquid inlet is connected to a front side of the liquid cooling plate body. The peripheral liquid inflow channel is bifurcated at the position of the liquid inlet to form a left peripheral liquid inflow channel and a right peripheral liquid inflow channel. A left section of the left peripheral liquid inflow channel communicates with the inlets of multiple branch channels at a left side. A right section of the right peripheral liquid inflow channel communicates with the inlets of multiple branch channels at a right side. The effluent liquid collecting channel is located at a middle position of the liquid cooling plate body in a front-rear direction and is spaced apart from the peripheral liquid inflow channel.

A cooling liquid is bifurcated after being fed via the liquid inlet and then flows through the left peripheral liquid inflow channel and the right peripheral liquid inflow channel. The cooling liquid then flows through the multiple branch channels at the left and right sides into the effluent liquid collecting channel, and flows out from the liquid outlet.

Optionally, the branch channel is circuitous, and the effluent liquid collecting channel is partitioned into a left effluent liquid collecting channel and a right effluent liquid collecting channel by a stiffened plate. Outlets of multiple branch channels at the left side communicates with the left effluent liquid collecting channel, and outlets of multiple branch channels at the right side communicates with the right effluent liquid collecting channel. The left effluent liquid collecting channel and the right effluent liquid collecting channel are combined at the front side of the liquid cooling plate body and then brought into communication with the liquid outlet.

Optionally, the battery pack further includes a thermally conductive structural adhesive, a bottom structural adhesive and a tray. The liquid cooling plate, the thermally conductive structural adhesive, the battery stack, the bottom structural adhesive and the tray are stacked sequentially from top to bottom.

The tray includes a square frame. A left end face of the battery stack is spaced apart from an inner wall of a left frame of the square frame by a buffer layer capable of absorbing the expansion of the battery core. A right end face of the battery stack is spaced apart from an inner wall of a right frame of the square frame by a buffer layer capable of absorbing the expansion of the battery core.

Optionally, the thermally conductive structural adhesive includes a left highly thermally conductive structural adhesive, an intermediate lowly thermally conductive structural adhesive, and a right highly thermally conductive structural adhesive arranged sequentially in a left-right direction. The left highly thermally conductive structural adhesive, the intermediate lowly thermally conductive structural adhesive, and the right highly thermally conductive structural adhesive are bonded between the top surface of the battery stack and a bottom surface of the liquid cooling plate body. The coefficient of thermal conductivity of the intermediate lowly thermally conductive structural adhesive is smaller than that of the left highly thermally conductive structural adhesive and the right highly thermally conductive structural adhesive.

Optionally, the battery pack further includes a heat preservation layer wrapping around an outer surface of the tray.

Optionally, the application area of the bottom structural adhesive is not greater than the area of a bottom surface of the battery stack.

The bottom structural adhesive includes multiple structural adhesive strips spaced from each other.

According to the battery pack of the present invention, the liquid cooling plate body is internally provided with a liquid cooling circuit, which includes a peripheral liquid inflow channel, an effluent liquid collecting channel, and an intermediate channel communicating between the peripheral liquid inflow channel and the effluent liquid collecting channel. The peripheral liquid inflow channel encircles an edge of the liquid cooling plate body and covers an edge of a top surface of the battery stack. The intermediate channel is located at an inner side of the peripheral liquid inflow channel and covers a middle area of the top surface of the battery stack. In this way, the cooling liquid is fed from a peripheral edge of the liquid cooling plate, flows through a peripheral area of the battery stack, and then flows back from the effluent liquid collecting channel after being shunted by the intermediate channel. The peripheral area of the liquid cooling plate has a higher flow rate and a higher heating capacity. At a low temperature, the battery pack can match the heating requirements of different areas, give more heat to the peripheral area of the battery pack to balance the heat loss and control the temperature difference in the battery pack.

In another aspect, the present invention provides a vehicle, which includes the battery pack according to the present invention.

### BRIEF DESCRIPTION OF THE DRAWINGS

FIG. 1 is an exploded view of a battery pack provided in related art;
FIG. 2 is an exploded view of a battery pack provided in a first embodiment of the present invention;
FIG. 3 is a schematic view of a liquid cooling plate in the battery pack provided in the first embodiment of the present invention;
FIG. 4 is a schematic view showing the distribution of a thermally conductive structural adhesive in the battery pack provided in the first embodiment of the present invention;
FIG. 5 is a schematic view of a thermally conductive structural adhesive in the battery pack provided in the first embodiment of the present invention;
FIG. 6 is a schematic view of a liquid cooling plate in a battery pack provided in a second embodiment of the present invention;
FIG. 7 is a schematic view showing the distribution of a thermally conductive structural adhesive in the battery pack provided in the second embodiment of the present invention;
FIG. 8 is a schematic view of a thermally conductive structural adhesive in the battery pack provided in the second embodiment of the present invention; and
FIG. 9 is a schematic view of a bottom structural adhesive in a battery pack provided in an embodiment of the present invention.

### DETAILED DESCRIPTION

To make the technical problem to be solved, the technical solution, and the beneficial effects of the present invention clearer, the present invention is described in further detail below in connection with embodiments with reference to accompanying drawings. It should be understood that the specific embodiments described herein are merely used to explain the present invention but are not intended to limit the present invention.

### First Embodiment

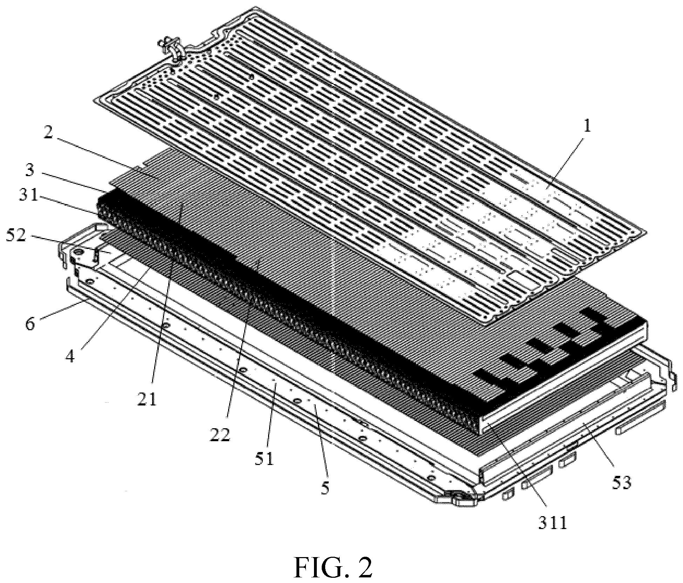

As shown in FIG. 2 to FIG. 5, a first embodiment of the present invention provides a battery pack, which includes, from top to bottom, a liquid cooling plate 1, a thermally conductive structural adhesive 2, a battery stack 3, a bottom structural adhesive 4 and a tray 5 laminated in sequence. The battery stack 3 includes at least one battery module 31, and the battery module 31 includes multiple battery cores 311 stacked in a front-rear direction of a vehicle.

The liquid cooling plate 1 is preferably a stamped and soldered liquid cooling plate.

The liquid cooling plate 1 includes a liquid cooling plate body 11, a liquid inlet 12 and a liquid outlet 13. The liquid cooling plate body 11 is internally provided with a liquid cooling circuit, which includes a peripheral liquid inflow channel 111, an effluent liquid collecting channel 112, and an intermediate channel 113 communicating between the peripheral liquid inflow channel 111 and the effluent liquid collecting channel 112. The liquid inlet 12 is connected onto the liquid cooling plate body 11 and communicates with the peripheral liquid inflow channel 111. The liquid outlet 13 is connected onto the liquid cooling plate body 11 and communicates with the effluent liquid collecting channel 112.

The peripheral liquid inflow channel 111 encircles an edge of the liquid cooling plate body 1 and covers an edge of a top surface of the battery stack 3. The intermediate channel is 113 located at an inner side of the peripheral liquid inflow channel 111 and covers a middle area of the top surface of the battery stack 3.

The intermediate channel 113 includes multiple branch channels 1131. An inlet 11311 of each of the branch channel 1131 communicates with the peripheral liquid inflow channel 111, and an outlet 11312 of each of the branch channel 1131 communicates with the effluent liquid collecting channel 112. The inlets 11311 of the multiple branch channels 1131 are arranged at intervals along the peripheral liquid inflow channel 111, and the outlets 11312 of the multiple branch channels 1131 are arranged at intervals along the effluent liquid collecting channel 112.

The number of battery module 31 and the number of battery core 311 in each battery module 31 are set according to the voltage and current requirements. Preferably, only one battery module 31 is used, to reduce the assembly space between multiple battery modules 31 and stack more battery cores 311, thereby improving the energy density per unit volume of the battery pack and increasing the battery life of the vehicle.

The battery core 311 used is a square sheet-like battery core, that is, a blade battery. The blade battery has a length that is much larger than the width, and a thickness that is much smaller than the width. The blade battery can utilize the space in the battery pack to the maximum extent, and the blade battery stack structure has a high strength, so a reinforcing beam structure at the bottom of the tray 5 can be omitted, which further improves the energy density per unit volume of the battery pack and increases the battery life.

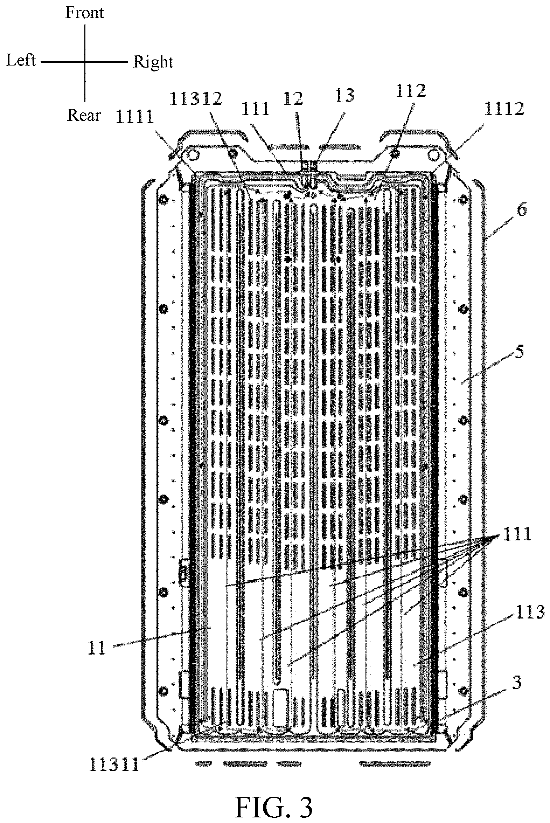

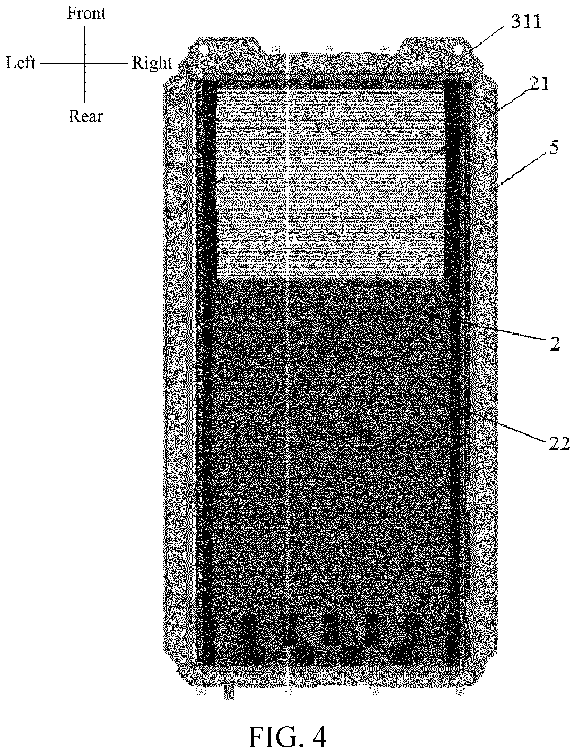

In this embodiment, the front-rear direction and left-right direction of the vehicle are shown in FIG. 3 and FIG. 4.

In this embodiment, the branch channel 1131 extends in the front-rear direction of the vehicle. That is, the branch channel 1131 is perpendicular to the battery core 311. Preferably, the interval between the multiple branch channels 1131 is the same, to improve the temperature balance in the battery pack.

The liquid inlet 12 is connected to a front side of the liquid cooling plate body 1. The peripheral liquid inflow channel 111 is bifurcated at the position of the liquid inlet 12 to form a left peripheral liquid inflow channel 1111 and a right peripheral liquid inflow channel 1112. Rear sides of the left peripheral liquid inflow channel 1111 and the right peripheral liquid inflow channel 1112 communicate with the inlets 11311 of the multiple branch channels 1131. The effluent liquid collecting channel 112 is located at the front side of the liquid cooling plate body 1 and is spaced apart from the peripheral liquid inflow channel 111. That is, the peripheral liquid inflow channel 111 and the effluent liquid collecting channel 112 are located at the same side of the liquid cooling plate body 1; however, they are not in direct communication with each other, but communicate with each other through the multiple branch channels 1131.

A peripheral area of the liquid cooling plate 1 is preferential for the flow distribution. A main circuit of the liquid cooling plate 1 is fed with liquid from the peripheral area. That is, the cooling liquid is bifurcated after being fed via the liquid inlet 12, and then flows through the left peripheral liquid inflow channel 1111 and the right peripheral liquid inflow channel 1112. The cooling liquid is subsequently combined at the rear side of the left peripheral liquid inflow channel 1111 and the right peripheral liquid inflow channel 1112, then flows through the multiple branch channels 1131 into the effluent liquid collecting channel 112, and flows out from the liquid outlet 13. Since the peripheral liquid inflow channel 111 encircles the edge of the liquid cooling plate body 1 and covers the edge of the top surface of the battery stack 3, the liquid cooling plate 1 can preferentially heat (or cool) the peripheral area of the battery stack 3.

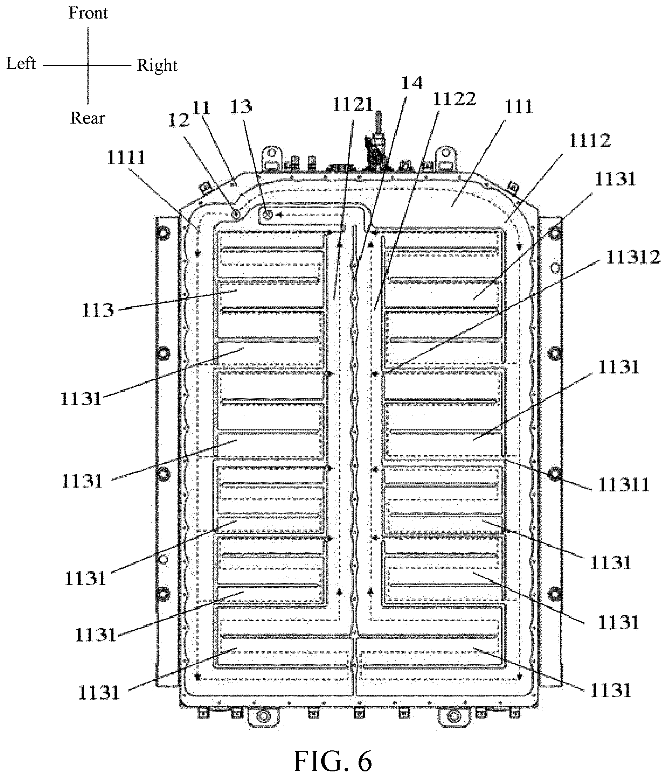

In FIG. 3, 6 branch channels 1131 are provided. However, other number of branch channels can be set according to the size of the battery stack.

The tray 5 includes a square frame 51, a front anti-expansion beam 52 arranged on a front frame of the square frame 51, and a rear anti-expansion beam 53 arranged on a rear frame of the square frame 51. A front end face of the battery stack 3 is spaced apart from the front anti-expansion beam 52 by a buffer layer capable of absorbing the expansion of the battery core. A rear end face of the battery stack 3 is spaced apart from the rear anti-expansion beam 53 by a buffer layer capable of absorbing the expansion of the battery core. The buffer layer can be, for example, an aerogel or plastic gasket. The buffer layer can absorb the expansion of the battery core and reduce the heat transfer between the battery stack 3 and the tray 5 to some extent.

The front anti-expansion beam 52 and the rear anti-expansion beam 53 are respectively spaced apart from a large surface of a first and last battery core 311 of the battery stack 3 by the buffer layers (not shown), so as to inhibit the expansion of the battery pack. The main weight of the tray 5 is concentrated on the square frame 51, and the battery core 311 generates heat loss to the environment through the tray 5. When the temperature of the battery pack is increased, it is necessary to increase the temperature of the square frame 51 of the tray 5. Particularly, due to the presence of the front anti-expansion beams 52 and the rear anti-expansion beams 53, more heat needs to be absorbed. Through the above analysis, the battery cores 311 adjacent to the front anti-expansion beam 52 and the rear anti-expansion beam 53 have greater heat loss and lower temperature. To balance the temperature difference, it is necessary to give more heat to the battery cores 311 at the front and rear sides.

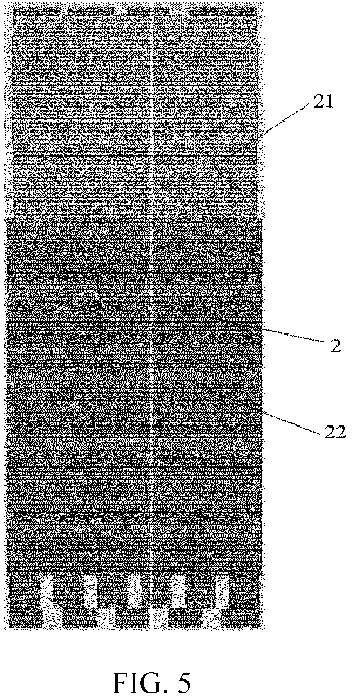

As shown in FIG. 4 and FIG. 5, the thermally conductive structural adhesive 2 includes a front-flow-path structural adhesive 21 and a rear-flow-path highly thermally conductive structural adhesive 22 arranged in a front-rear direction. The front-flow-path structural adhesive 21 and the rear-flow-path highly thermally conductive structural adhesive 22 is bonded between the top surface of the battery stack 3 and a bottom surface of the liquid cooling plate body 11. The coefficient of thermal conductivity of the front-flow-path structural adhesive 21 is smaller than that of the rear-flow-path highly thermally conductive structural adhesive 22. That is, the front-flow-path structural adhesive 21 has no or low thermal conductivity.

As shown in FIG. 4, the left and right sides of the battery stack 3 are the preferential flow-through areas of the liquid cooling circuit, which have strong heating capacity. A return path of the liquid cooling circuit starts from the second section of battery core 311, which has low liquid temperature and flow rate and weak heating capacity. To avoid excessive heat exchange in the front section of the liquid cooling circuit, the top surface of the battery stack 3 corresponding to the front section of the liquid cooling circuit is coated with a black structural adhesive E21 (front-flow-path structural adhesive 21). To improve the heat exchange capacity of the rear section of the liquid cooling circuit, the rear section of the liquid cooling circuit is coated with a thermally conductive structural adhesive (rear-flow-path highly thermally conductive structural adhesive 22) with a high coefficient of thermal conductivity. A thermally conductive structural adhesive with a different coefficient of thermal conductivity is applied in a different area, and the peripheral area and the central area are applied differentially with adhesives, and controlled according to the requirements of thermal management, which is beneficial to the control of the temperature difference in the battery pack.

Moreover, the battery pack further includes a heat preservation layer 6 wrapping around an outer surface of the tray 5. Specifically, the heat preservation layer 6 covers the outer surface of the square frame 51 of the tray 5. The application of the external heat preservation layer 6 integrates a previous internal heat preservation layer to the outside of the tray 5, and increases the temperature in the peripheral area of the battery stack 3 by increasing the temperature of the tray 5. The thickness and specific fixed area of the heat preservation layer 6 depend on the vehicle space and heat preservation requirements.

In addition, the application area of the bottom structural adhesive 4 is not greater than the area of a bottom surface of the battery stack 3. That is, the battery core 311 and the tray 5 are fixed by incompletely coating with the structural adhesive. By reducing the adhesive area of the bottom structural adhesive 4, the heat exchange of the battery core 311 with the tray can be reduced, thus increasing the temperature of the battery core 311.

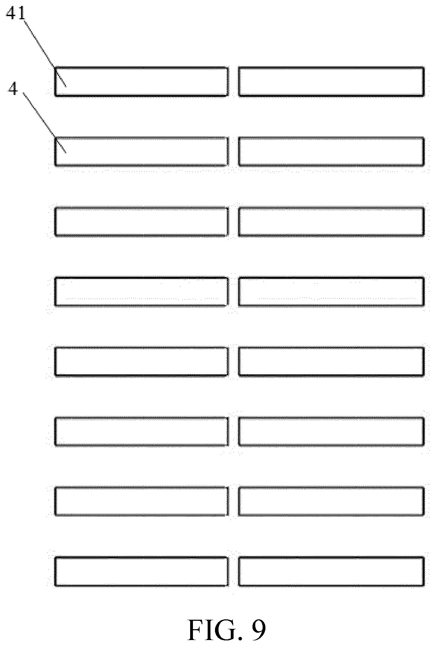

For example, as shown in FIG. 9, the bottom structural adhesive 4 includes multiple structural adhesive strips 41 spaced from each other. The shape, number, area and arrangement of the structural adhesive strip 41 can be adjusted as required.

According to the battery pack provided in the first embodiment of the present invention, the cooling liquid is fed from the peripheral edge of the liquid cooling plate 1, flows through the peripheral area of the battery stack 3, and then flows back from the effluent liquid collecting channel 112 after being shunted by the intermediate channel 113. The peripheral area of the liquid cooling plate 1 has a higher flow rate and a higher heating capacity. At a low temperature, the battery pack can match the heating requirements of different areas and give more heat to the edge area of battery pack to balance the heat loss and control the temperature difference in the battery pack.

In addition, compared with the related art shown in FIG. 1, the sealing cover and the fireproof and heat-insulating cotton are omitted, the number of parts is reduced, the parts become much flat and regular, the space utilization rate is improved, and the cost is reduced.

In addition, in terms of the thermal management effect, the cooling liquid is fed from the peripheral edge of the liquid cooling plate, flows through the peripheral area of the battery stack, and then flows back from the effluent liquid collecting channel after being shunted by the intermediate channel. The peripheral area of the liquid cooling plate has a higher flow rate and a higher heating capacity. As a result, the difference in heat load between the peripheral and central area of the battery pack is distinguished, which is beneficial to the management of the temperature difference of the battery and the improvement of the low-temperature performance of the battery.

In addition, in terms of the design, the battery pack of the present invention has more flexible temperature adjustment means by virtue of the arrangement of the liquid cooling circuit of the liquid cooling plate and the different arrangement of the thermally conductive structural adhesive, by which the temperature difference of the battery can be well controlled.

### Second Embodiment

As shown in FIG. 6 to FIG. 8, a battery pack provided in a second embodiment of the present invention is different from that in the first embodiment in that the battery module 31 includes multiple battery cores 311 stacked in a left-right direction of a vehicle.

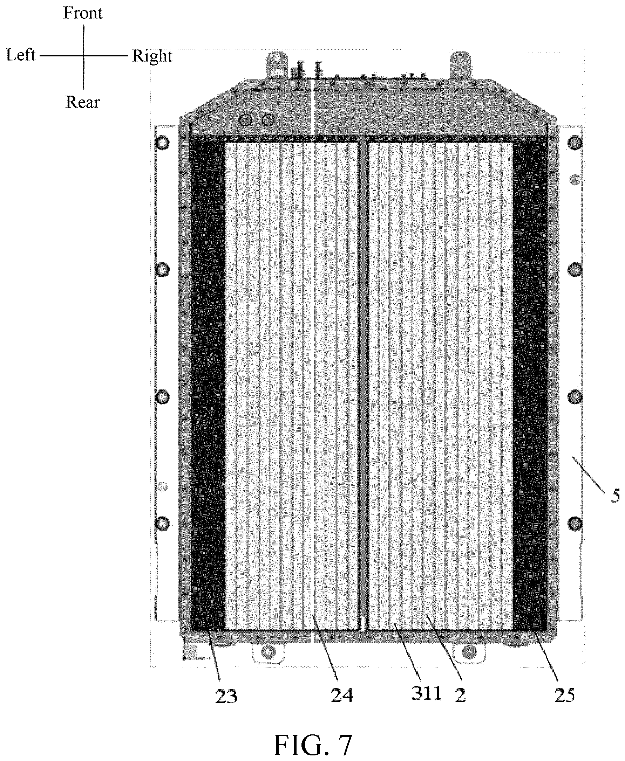

In this embodiment, the front-rear direction and left-right direction of the vehicle are shown in FIG. 6 and FIG. 7.

In this embodiment, the multiple branch channels 1131 extends in the left-right direction of the vehicle. That is, the branch channel 1131 is perpendicular to the battery core 311. Preferably, the interval between the multiple branch channels 1131 is the same, to improve the temperature balance in the battery pack.

The liquid inlet 12 is connected to a front side of the liquid cooling plate body 11. The peripheral liquid inflow channel 111 is bifurcated at the position of the liquid inlet 12 to form a left peripheral liquid inflow channel 1111 and a right peripheral liquid inflow channel 1112. A left section of the left peripheral liquid inflow channel 1111 communicates with the inlets 11311 of multiple branch channel 1131 at the left side. A right section of the right peripheral liquid inflow channel 1112 communicates with the inlets 11311 of multiple branch channels 1131 at the right side. The effluent liquid collecting channel 112 is located at a middle position of the liquid cooling plate body 11 in a front-rear direction and is spaced apart from the peripheral liquid inflow channel 111. That is, the peripheral liquid inflow channel 111 and the effluent liquid collecting channel 112 are not in direct communication with each other, but communicate with each other through the multiple branch channels 1131.

A peripheral area of the liquid cooling plate 1 is preferential for the flow distribution. A main circuit of the liquid cooling plate 1 is fed with liquid from the peripheral area. That is, the cooling liquid is bifurcated after being fed via the liquid inlet 12, and then flows through the left peripheral liquid inflow channel 1111 and the right peripheral liquid inflow channel 1112. The cooling liquid then flows through the multiple branch channels 1131 at the left and right sides into the effluent liquid collecting channel 12, and flows out from the liquid outlet 13.

The branch channel 1131 is circuitous, for example, Z-shaped, W-shaped and S-shaped. The circuitous branch channel 1131 can ensure the uniform temperature of the battery core 311, and ensure that the cooling liquid flows back from the central area.

As shown in FIG. 6, there are 5 branch channels 1131 at each of the left side and the right side. However, other numbers of branch channels 1131 can be set according to different requirements. Moreover, in some embodiments, the branch channels 1131 at the left side and the right side do not need to be completely symmetrical, and their shapes and numbers may be different.

As shown in FIG. 6, the effluent liquid collecting channel 112 is partitioned into a left effluent liquid collecting channel 1121 and a right effluent liquid collecting channel 1122 by a stiffened plate 14. Outlets 11312 of the multiple branch channels 1131 at the left side communicates with the left effluent liquid collecting channel 1121, and outlets 11312 of the multiple branch channels 1131 at the right side communicates with the right effluent liquid collecting channel 1122. The left effluent liquid collecting channel 1121 and the right effluent liquid collecting channel 1122 are combined at the front side of the liquid cooling plate body 1 and then brought into communication with the liquid outlet 13.

For a stamped and soldered liquid cooling plate, the liquid cooling circuit of the stamped and soldered liquid cooling plate is divided by the soldered interface, to form the peripheral liquid inflow channel 111, the effluent liquid collecting channel 112 and the intermediate channel 113 communicating between the peripheral liquid inflow channel 111 and the effluent liquid collecting channel 112. The stiffened plate 14 is a portion of the soldered interface.

In the second embodiment, the tray 5 includes a square frame 51. A left end face of the battery stack 3 is spaced apart from an inner wall of a left frame of the square frame 51 by a buffer layer capable of absorbing the expansion of the battery core, and a right end face of the battery stack 3 is spaced apart from an inner wall of a right frame of the square frame 51 by a buffer layer capable of absorbing the expansion of the battery core. The buffer layer can be, for example, an aerogel or plastic gasket. The buffer layer can absorb the expansion of the battery core and reduce the heat transfer between the battery stack 3 and the tray 5 to some extent. That is, in the second embodiment, the left and right frames of the tray 5 act as the anti-expansion beams to inhibit the expansion of the battery. The main weight of the tray 5 is also concentrated on the square frame 51, and the battery core 311 generates heat loss to the environment through the tray 5. When the temperature of the battery pack is increased, it is necessary to increase the temperature of the square frame 51 of the tray 5.

Different from the first embodiment, in the second embodiment, the height of the square frame 51 of the tray 5 is significantly higher than that in the first embodiment, and requires more heat. The battery cores 311 at the left and right sides have greater heat loss and lower temperature. To balance the temperature difference, it is necessary to give more heat to the battery cores 311 at the left and right sides.

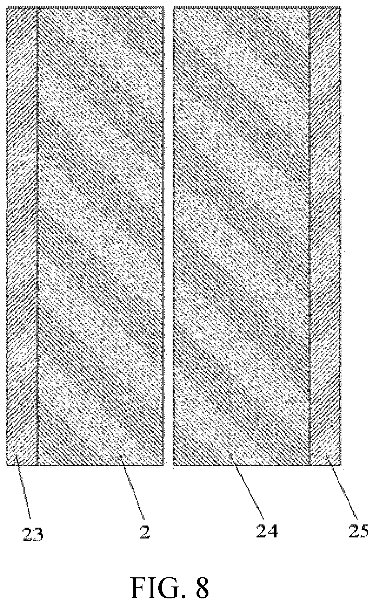

As shown in FIG. 7 and FIG. 8, the thermally conductive structural adhesive 2 includes a left highly thermally conductive structural adhesive 23, an intermediate lowly thermally conductive structural adhesive 24, and a right highly thermally conductive structural adhesive 25 arranged sequentially in a left-right direction. The left highly thermally conductive structural adhesive 23, the intermediate lowly thermally conductive structural adhesive 24, and the right highly thermally conductive structural adhesive 25 are bonded between the top surface of the battery stack 3 and a bottom surface of the liquid cooling plate body 11. The coefficient of thermal conductivity of the intermediate lowly thermally conductive structural adhesive 24 is smaller than that of the left highly thermally conductive structural adhesive 23 and the right highly thermally conductive structural adhesive 25. Preferably, the left highly thermally conductive structural adhesive 23 and the right highly thermally conductive structural adhesive 25 have the same coefficient of thermal conductivity, and the same coating shape and area.

That is, in the second embodiment, the left and right peripheral areas of the battery stack 3 are coated with a thermally conductive structural adhesive with a high coefficient of thermal conductivity (left highly thermally conductive structural adhesive 23 and right highly thermally conductive structural adhesive 25), and other areas are coated with a thermally conductive structural adhesive with a low coefficient of thermal conductivity (intermediate lowly thermally conductive structural adhesive 24). Compared with the first embodiment, the difference mainly lies in the design of the liquid cooling circuit and the heat loss. The liquid cooling circuit has shunts in the process of flowing along the peripheral area, and a slightly weaker heating capacity than that in the first embodiment. However, the arrangement of the thermally conductive structural adhesive 2 in the second embodiment causes a larger heat loss in the peripheral area of the battery pack than that in the first embodiment. Therefore, it is necessary to increase the heat exchange in the edge area. That is, the peripheral area is coated with a thermally conductive structural adhesive with a higher coefficient of thermal conductivity.

According to the battery pack provided in the second embodiment of the present invention, the cooling liquid is fed from the peripheral edge of the liquid cooling plate 1, flows through the peripheral area of the battery stack 3, and then flows back from the effluent liquid collecting channel 112 after being shunted by the intermediate channel 113. The peripheral area of the liquid cooling plate 1 has a higher flow rate and a higher heating capacity. At a low temperature, the battery pack can match the heating requirements of different areas and give more heat to the edge area of battery pack to balance the heat loss and control the temperature difference in the battery pack.

In addition, compared with the related art shown in FIG. 1, the sealing cover and the fireproof and heat-insulating cotton are omitted, the number of parts is reduced, the parts become much flat and regular, the space utilization rate is improved, and the cost is reduced.

In addition, in terms of the thermal management effect, the cooling liquid is fed from the peripheral edge of the liquid cooling plate, flows through the peripheral area of the battery stack, and then flows back from the effluent liquid collecting channel after being shunted by the intermediate channel. The peripheral area of the liquid cooling plate has a higher flow rate and a higher heating capacity. As a result, the difference in heat load between the peripheral and central area of the battery pack is distinguished, which is beneficial to the management of the temperature difference of the battery and the improvement of the low-temperature performance of the battery.

In addition, in terms of the design, the battery pack of the present invention has more flexible temperature adjustment means by virtue of the arrangement of the liquid cooling circuit of the liquid cooling plate and the different arrangement of the thermally conductive structural adhesive, by which the temperature difference of the battery can be well controlled.

Further, an embodiment of the present invention provides a vehicle, which includes a battery pack according to the above embodiment.

The vehicle can be a hybrid vehicle or a pure electric vehicle.

The present invention has been described in detail with reference to preferred embodiments, which however are not intended to limit the present invention. Any modifications, equivalent improvements and substitutions can be made without departing from the principle of the present invention, which fall within the protection scope of the present invention as defined in the appended claims.

The reference numerals in the specification are as follows.
1. liquid cooling plate; 11. liquid cooling plate body; 111. peripheral liquid inflow channel; 1111. left peripheral liquid inflow channel; 1112. right peripheral liquid inflow channel; 112: effluent liquid connecting channel; 1121. left effluent liquid collecting channel; 1122. right effluent liquid collecting channel; 113. intermediate channel; 1131. branch channel; 11311. inlet; 11312. outlet; 12. liquid inlet; 13. liquid outlet; 14. stiffened plate:
2. thermally conductive structural adhesive; 21. front-flow-path structural adhesive; 22. rear-flow-path highly thermally conductive structural adhesive; 23. left highly thermally conductive structural adhesive; 24. intermediate lowly thermally conductive structural adhesive; 25. right highly thermally conductive structural adhesive;
3. battery stack; 31. battery module; 311. battery core;
4. bottom structural adhesive; 41. structural adhesive strip;
5. tray; 51. square frame; 52. front anti-expansion beam; 53. rear anti-expansion beam;
6. heat preservation layer.

## Claims

1. A battery pack, comprising: a liquid cooling plate (1), and a battery stack (3), wherein the battery stack (3) comprises at least one battery module (31); and
the liquid cooling plate (1) comprises a liquid cooling plate body (11), a liquid inlet (12) and a liquid outlet (13), wherein the liquid cooling plate body (11) defines a liquid cooling circuit, the liquid cooling circuit comprises a peripheral liquid inflow channel (111), an effluent liquid collecting channel (112), and an intermediate channel (113) communicating between the peripheral liquid inflow channel (111) and the effluent liquid collecting channel (112); the liquid inlet (12) is connected onto the liquid cooling plate body (11) and communicates with the peripheral liquid inflow channel (111); and the liquid outlet (13) is connected onto the liquid cooling plate body (11) and communicates with the effluent liquid collecting channel (112);
wherein the peripheral liquid inflow channel (111) encircles an edge of the liquid cooling plate body (11) and covers an edge of a top surface of the battery stack (3), and the intermediate channel (113) is located at an inner side of the peripheral liquid inflow channel (111) and covers a middle area of the top surface of the battery stack (3);
wherein the intermediate channel (113) comprises a plurality of branch channels (1131), wherein an inlet (11311) of each of the branch channels (1131) communicates with the peripheral liquid inflow channel (111), and an outlet (11312) of each of the branch channels (1131) communicates with the effluent liquid collecting channel (112); and the inlets (11311) of the plurality of branch channels (1131) are arranged at intervals along the peripheral liquid inflow channel (111), and the outlets (11312) of the plurality of branch channels (1131) are arranged at intervals along the effluent liquid collecting channel (112); and
wherein: the battery module (31) comprises a plurality of battery cores (311) stacked in a front-rear direction of a vehicle and the plurality of branch channels (1131) extends in the front-rear direction of the vehicle;
the liquid inlet (12) is connected to a front side of the liquid cooling plate body (11); the peripheral liquid inflow channel (111) is bifurcated at the position of the liquid inlet (12) to form a left peripheral liquid inflow channel (1111) and a right peripheral liquid inflow channel (1112), wherein rear sides of the left peripheral liquid inflow channel (1111) and the right peripheral liquid inflow channel (1112) communicate with the inlets (11311) of the plurality of branch channels (1131); and the effluent liquid collecting channel (112) is located at the front side of the liquid cooling plate body (11) and is spaced apart from the peripheral liquid inflow channel (111); and
a cooling liquid is bifurcated after being fed via the liquid inlet (12) and then flows through the left peripheral liquid inflow channel (1111) and the right peripheral liquid inflow channel (1112); and the cooling liquid is subsequently combined at the rear side of the left peripheral liquid inflow channel (1111) and the right peripheral liquid inflow channel (1112), then flows through the plurality of branch channels (1131) into the effluent liquid collecting channel (112), and flows out from the liquid outlet (13).

2. The battery pack according to claim 1, further comprising a thermally conductive structural adhesive (2), a bottom structural adhesive (4) and a tray (5), wherein the liquid cooling plate (1), the thermally conductive structural adhesive (2), the battery stack (3), the bottom structural adhesive (4) and the tray (5) are stacked sequentially from top to bottom; and
the tray (5) comprises a square frame (51), a front anti-expansion beam (52) arranged on a front frame of the square frame (51), and a rear anti-expansion beam (53) arranged on a rear frame of the square frame (51), wherein a front end face of the battery stack (3) is spaced apart from the front anti-expansion beam (52) by a buffer layer capable of absorbing the expansion of the battery core (311); and a rear end face of the battery (3) stack is spaced apart from the rear anti-expansion beam (53) by a buffer layer capable of absorbing the expansion of the battery core (311).

3. The battery pack according to claim 2, wherein the thermally conductive structural adhesive (2) comprises a front-flow-path structural adhesive (21) and a rear-flow-path highly thermally conductive structural adhesive (22) arranged in a front-rear direction, wherein the front-flow-path structural adhesive (21) and the rear-flow-path highly thermally conductive structural adhesive (22) are bonded between the top surface of the battery stack (3) and a bottom surface of the liquid cooling plate body (11); and the coefficient of thermal conductivity of the front-flow-path structural adhesive (21) is smaller than that of the rear-flow-path highly thermally conductive structural adhesive (22).

4. A battery pack, comprising: a liquid cooling plate (1), and a battery stack (3), wherein the battery stack (3) comprises at least one battery module (31); and
the liquid cooling plate (1) comprises a liquid cooling plate body (11), a liquid inlet (12) and a liquid outlet (13), wherein the liquid cooling plate body (11) defines a liquid cooling circuit, the liquid cooling circuit comprises a peripheral liquid inflow channel (111), an effluent liquid collecting channel (112), and an intermediate channel (113) communicating between the peripheral liquid inflow channel (111) and the effluent liquid collecting channel (112); the liquid inlet (12) is connected onto the liquid cooling plate body (11) and communicates with the peripheral liquid inflow channel (111); and the liquid outlet (13) is connected onto the liquid cooling plate body (11) and communicates with the effluent liquid collecting channel (112);
wherein the peripheral liquid inflow channel (111) encircles an edge of the liquid cooling plate body (11) and covers an edge of a top surface of the battery stack (3), and the intermediate channel (113) is located at an inner side of the peripheral liquid inflow channel (111) and covers a middle area of the top surface of the battery stack (3);
wherein the intermediate channel (113) comprises a plurality of branch channels (1131), wherein an inlet (11311) of each of the branch channels (1131) communicates with the peripheral liquid inflow channel (111), and an outlet (11312) of each of the branch channels (1131) communicates with the effluent liquid collecting channel (112); and the inlets (11311) of the plurality of branch channels (1131) are arranged at intervals along the peripheral liquid inflow channel (111), and the outlets (11312) of the plurality of branch channels (1131) are arranged at intervals along the effluent liquid collecting channel (112); and
wherein: the battery module (31) comprises a plurality of battery cores (311) stacked in a left-right direction of a vehicle, and the plurality of branch channels (1131) extends in the left-right direction of the vehicle;
the liquid inlet (12) is connected to a front side of the liquid cooling plate body (11); the peripheral liquid inflow channel (111) is bifurcated at the position of the liquid inlet (12) to form a left peripheral liquid inflow channel (1111) and a right peripheral liquid inflow channel (1112), wherein a left section of the left peripheral liquid inflow channel (1111) communicates with the inlets of a plurality of branch channels (1131) at a left side, and a right section of the right peripheral liquid inflow channel (1112) communicates with the inlets of a plurality of branch channels (1131) at a right side; and the effluent liquid collecting channel (112) is located at a middle position of the liquid cooling plate body (11) in a front-rear direction and is spaced apart from the peripheral liquid inflow channel (111); and
a cooling liquid is bifurcated after being fed via the liquid inlet (12) and then flows through the left peripheral liquid inflow channel (1111) and the right peripheral liquid inflow channel (1112); and the cooling liquid then flows through the plurality of branch channels (1131) at the left and right sides into the effluent liquid collecting channel (112), and flows out from the liquid outlet (13).

5. The battery pack according to claim 4, wherein: the branch channel is circuitous, and the effluent liquid collecting channel (112) is partitioned into a left effluent liquid collecting channel (1121) and a right effluent liquid collecting channel (1122) by a stiffened plate (14), wherein outlets of the plurality of branch channels (1131) at the left side communicates with the left effluent liquid collecting channel (1121), and outlets of the plurality of branch channels (1131) at the right side communicates with the right effluent liquid collecting channel (1122); and the left effluent liquid collecting channel (1121) and the right effluent liquid collecting channel (1122) are combined at the front side of the liquid cooling plate body (11) and then brought into communication with the liquid outlet (13).

6. The battery pack according to any one of claims 1 to 5, further comprising a thermally conductive structural adhesive (2), a bottom structural adhesive (4) and a tray (5), wherein the liquid cooling plate (1), the thermally conductive structural adhesive (2), the battery stack (3), the bottom structural adhesive (4) and the tray (5) are stacked sequentially from top to bottom; and
the tray (5) comprises a square frame (51), wherein a left end face of the battery stack (3) is spaced apart from an inner wall of a left frame of the square frame (51) by a buffer layer capable of absorbing the expansion of the battery core (311), and a right end face of the battery stack (3) is spaced apart from an inner wall of a right frame of the square frame (51) by a buffer layer capable of absorbing the expansion of the battery core (311).

7. The battery pack according to claim 6, wherein the thermally conductive structural adhesive (2) comprises a left highly thermally conductive structural adhesive (23), an intermediate lowly thermally conductive structural adhesive (24), and a right highly thermally conductive structural adhesive (25) arranged sequentially in a left-right direction, wherein the left highly thermally conductive structural adhesive (23), the intermediate lowly thermally conductive structural adhesive (24), and the right highly thermally conductive structural adhesive (25) are bonded between the top surface of the battery stack (3) and a bottom surface of the liquid cooling plate body (11), and the coefficient of thermal conductivity of the intermediate lowly thermally conductive structural adhesive (24) is smaller than that of the left highly thermally conductive structural adhesive (23) and the right highly thermally conductive structural adhesive (25).

8. The battery pack according to claim 2, 3, 6 or 7, further comprising: a heat preservation layer (6) wrapping around an outer surface of the tray (5).

9. The battery pack according to claim 2, 3, 6 or 7, wherein the application area of the bottom structural adhesive (4) is not greater than the area of a bottom surface of the battery stack (3); and
the bottom structural adhesive (4) comprises a plurality of structural adhesive strips (41) spaced from each other.

10. A vehicle, comprising: a battery pack according to any one of claims 1 to 9.

## Patentansprüche

1. Batteriepack bzw. Batteriesatz, bestehend aus: einer Flüssigkeitskühlplatte (1) und einem Batteriestapel (3), wobei der Batteriestapel (3) mindestens ein Batteriemodul (31) umfasst; und
die Flüssigkeitskühlplatte (1) einen Flüssigkeitskühlplattenkörper (11), einen Flüssigkeitseinlass (12) und einen Flüssigkeitsauslass (13) umfasst, wobei der Flüssigkeitskühlplattenkörper (11) einen Flüssigkeitskühlkreislauf definiert, der Flüssigkeitskühlkreislauf einen peripheren Flüssigkeitseinlasskanal (111), einen Flüssigkeitsauslass-Sammelkanal (112) und einen Zwischenkanal (113), der zwischen dem peripheren Flüssigkeitseinlasskanal (111) und dem Flüssigkeitsauslass-Sammelkanal (112) kommuniziert; der Flüssigkeitseinlass (12) mit dem Flüssigkeitskühlplattenkörper (11) verbunden ist und mit dem peripheren Flüssigkeitseinlasskanal (111) in Verbindung steht; und der Flüssigkeitsauslass (13) mit dem Flüssigkeitskühlplattenkörper (11) verbunden ist und mit dem Flüssigkeitsauslass-Sammelkanal (112) in Verbindung steht;
wobei der periphere Flüssigkeitseinlasskanal (111) eine Kante des Flüssigkeitskühlplattenkörpers (11) umgibt und eine Kante einer Oberseite des Batteriestapels (3) abdeckt, und der Zwischenkanal (113) an einer Innenseite des peripheren Flüssigkeitseinlasskanals (111) angeordnet ist und einen mittleren Bereich der Oberseite des Batteriestapels (3) abdeckt;
wobei der Zwischenkanal (113) eine Vielzahl von Abzweigkanälen (1131) umfasst, wobei ein Einlass (11311) jedes der Abzweigkanäle (1131) mit dem peripheren Flüssigkeitszufuhrkanal (111) in Verbindung steht, und ein Auslass (11312) jedes der Abzweigkanäle (1131) mit dem Flüssigkeitsauslass-Sammelkanal (112) in Verbindung steht; und die Einlässe (11311) der mehreren Abzweigkanäle (1131) in Abständen entlang des peripheren Flüssigkeitszuflusskanals (111) angeordnet sind, und die Auslässe (11312) der mehreren Abzweigkanäle (1131) in Abständen entlang des Abflussflüssigkeitssammelkanals (112) angeordnet sind; und
wobei: das Batteriemodul (31) mehrere Batteriekernelemente (311) umfasst, die in Längsrichtung eines Fahrzeugs gestapelt sind, und sich die mehrere Abzweigkanäle (1131) in Längsrichtung des Fahrzeugs erstrecken;
der Flüssigkeitseinlass (12) mit einer Vorderseite des Flüssigkeitskühlplattenkörpers (11) verbunden ist; der periphere Flüssigkeitszufuhrkanal (111) an der Position des Flüssigkeitseinlasses (12) gegabelt ist, um einen linken peripheren Flüssigkeitszufuhrkanal (1111) und einen rechten peripheren Flüssigkeitszufuhrkanal (1112) zu bilden, wobei die Rückseiten des linken peripheren Flüssigkeitszufuhrkanals (1111) und des rechten peripheren Flüssigkeitszufuhrkanals (1112) mit den Einlässen (11311) der mehreren Abzweigkanäle (1131) in Verbindung stehen; und der Abflussflüssigkeitssammelkanal (112) sich an der Vorderseite des Flüssigkeitskühlplattenkörpers (11) befindet und vom peripheren Flüssigkeitszuflusskanal (111) beabstandet ist; und
eine Kühlflüssigkeit nach der Zufuhr über den Flüssigkeitseinlass (12) aufgeteilt wird und dann durch den linken peripheren Flüssigkeitszufuhrkanal (1111) und den rechten peripheren Flüssigkeitszufuhrkanal (1112) fließt; und die Kühlflüssigkeit anschließend an der Rückseite des linken peripheren Flüssigkeitseinlasskanals (1111) und des rechten peripheren Flüssigkeitseinlasskanals (1112) zusammengeführt wird, dann durch die mehreren Abzweigkanäle (1131) in den Abflussflüssigkeitssammelkanal (112) fließt und aus dem Flüssigkeitsauslass (13) austritt.

2. Batteriepack gemäß Anspruch 1, der ferner einen wärmeleitenden Strukturklebstoff (2), einen Bodenstrukturklebstoff (4) und eine Schale bzw. ein Fach (5) umfasst, wobei die Flüssigkeitskühlplatte (1), der wärmeleitende Strukturklebstoff (2), der Batteriestapel (3), der Bodenstrukturklebstoff (4) und die Schale (5) nacheinander von oben nach unten gestapelt sind; und
die Schale (5) einen quadratischen Rahmen (51), einen vorderen Anti-Expansionsbalken (52), der an einem vorderen Rahmen des quadratischen Rahmens (51) angeordnet ist, und einen hinteren Anti-Expansionsbalken (53) umfasst, der an einem hinteren Rahmen des quadratischen Rahmens (51) angeordnet ist, wobei eine vordere Stirnfläche des Batteriestapels (3) durch eine Pufferschicht, die die Ausdehnung des Batteriekerns (311) absorbieren kann, von dem vorderen Anti-Ausdehnungsbalken (52) beabstandet ist; und eine hintere Stirnfläche des Batteriestapels (3) durch eine Pufferschicht, die die Ausdehnung des Batteriekerns (311) absorbieren kann, von dem hinteren Anti-Ausdehnungsbalken (53) beabstandet ist.

3. Batteriepack gemäß Anspruch 2, wobei der wärmeleitende Strukturklebstoff (2) einen Strukturklebstoff (21) für den vorderen Fließweg und einen hochwärmeleitenden Strukturklebstoff (22) für den hinteren Fließweg umfasst, die in einer Vorder-Hinter-Richtung angeordnet sind, wobei der Strukturklebstoff (21) für den vorderen Fließweg (21) und der hochwärmeleitfähige Strukturklebstoff (22) für den hinteren Fließweg zwischen der Oberseite des Batteriestapels (3) und einer Unterseite des Flüssigkeitskühlplattenkörpers (11) verbunden sind; und der Wärmeleitfähigkeitskoeffizient des Strukturklebstoffs (21) für den vorderen Fließweg kleiner ist als der des hochwärmeleitfähigen Strukturklebstoffs (22) für den hinteren Fließweg.

4. Batteriepack, umfassend: eine Flüssigkeitskühlplatte (1) und einen Batteriestapel (3), wobei der Batteriestapel (3) mindestens ein Batteriemodul (31) umfasst; und
die Flüssigkeitskühlplatte (1) einen Flüssigkeitskühlplattenkörper (11), einen Flüssigkeitseinlass (12) und einen Flüssigkeitsauslass (13) umfasst, wobei der Flüssigkeitskühlplattenkörper (11) einen Flüssigkeitskühlkreislauf definiert, der Flüssigkeitskühlkreislauf einen peripheren Flüssigkeitseinlasskanal (111), einen Flüssigkeitsauslasssammelkanal (112) und einen Zwischenkanal (113), der zwischen dem peripheren Flüssigkeitseinlasskanal (111) und dem Flüssigkeitsauslasssammelkanal (112) kommuniziert; der Flüssigkeitseinlass (12) mit dem Flüssigkeitskühlplattenkörper (11) verbunden ist und mit dem peripheren Flüssigkeitseinlasskanal (111) in Verbindung steht; und der Flüssigkeitsauslass (13) mit dem Flüssigkeitskühlplattenkörper (11) verbunden ist und mit dem Flüssigkeitsauslasssammelkanal (112) in Verbindung steht;
wobei der periphere Flüssigkeitszufuhrkanal (111) eine Kante des Flüssigkeitskühlplattenkörpers (11) umgibt und eine Kante einer Oberseite des Batteriestapels (3) abdeckt, und der Zwischenkanal (113) an einer Innenseite des peripheren Flüssigkeitszufuhrkanals (111) angeordnet ist und einen mittleren Bereich der Oberseite des Batteriestapels (3) abdeckt;
wobei der Zwischenkanal (113) mehrere Abzweigkanäle (1131) umfasst, wobei ein Einlass (11311) jedes der Abzweigkanäle (1131) mit dem peripheren Flüssigkeitszuflusskanal (111) in Verbindung steht, und ein Auslass (11312) jedes der Abzweigkanäle (1131) mit dem Abflussflüssigkeitssammelkanal (112) in Verbindung steht; und die Einlässe (11311) der mehreren Abzweigkanäle (1131) in Abständen entlang des peripheren Flüssigkeitszuflusskanals (111) angeordnet sind, und die Auslässe (11312) der mehreren Abzweigkanäle (1131) in Abständen entlang des Abflussflüssigkeitssammelkanals (112) angeordnet sind; und
wobei: das Batteriemodul (31) mehrere Batteriekernelemente (311) umfasst, die in einer Links-Rechts-Richtung eines Fahrzeugs gestapelt sind, und sich die mehrere Abzweigkanäle (1131) in der Links-Rechts-Richtung des Fahrzeugs erstrecken;
der Flüssigkeitseinlass (12) mit einer Vorderseite des Flüssigkeitskühlplattenkörpers (11) verbunden ist; der periphere Flüssigkeitszuflusskanal (111) an der Position des Flüssigkeitseinlasses (12) gegabelt ist, um einen linken peripheren Flüssigkeitszuflusskanal (1111) und einen rechten peripheren Flüssigkeitszuflusskanal (1112) zu bilden, wobei ein linker Abschnitt des linken peripheren Flüssigkeitszuflusskanals (1111) mit den Einlässen einer Vielzahl von Abzweigkanälen (1131) auf einer linken Seite in Verbindung steht und ein rechter Abschnitt des rechten peripheren Flüssigkeitszuflusskanals (1112) mit den Einlässen einer Vielzahl von Abzweigkanälen (1131) auf einer rechten Seite in Verbindung steht; und der Flüssigkeitsauslasskanal (112) sich in einer mittleren Position des Flüssigkeitskühlplattenkörpers (11) in einer Vorder-Hinter-Richtung befindet und vom peripheren Flüssigkeitszufuhrkanal (111) beabstandet ist; und
eine Kühlflüssigkeit nach der Zufuhr über den Flüssigkeitseinlass (12) aufgeteilt wird und dann durch den linken peripheren Flüssigkeitszufuhrkanal (1111) und den rechten peripheren Flüssigkeitszufuhrkanal (1112) fließt; und Kühlflüssigkeit dann durch die mehreren Abzweigkanäle (1131) auf der linken und rechten Seite in den Abflusskanal (112) fließt und aus dem Flüssigkeitsauslass (13) austritt.

5. Batteriepack gemäß Anspruch 4, wobei: der Abzweigkanal gewunden ist und der Abflussflüssigkeitssammelkanal (112) durch eine versteifte Platte (14) unterteilt ist, wobei die Auslässe der mehreren Abzweigkanäle (1131) auf der linken Seite mit dem linken Abflussflüssigkeitssammelkanal (1121) in Verbindung stehen und die Auslässe der mehreren Abzweigkanäle (1131) auf der rechten Seite mit dem rechten Abflussflüssigkeitssammelkanal (1122) in Verbindung stehen; und der linke Abflussflüssigkeitssammelkanal (1121) und der rechte Abflussflüssigkeitssammelkanal (1122) an der Vorderseite des Flüssigkeitskühlplattenkörpers (11) zusammengeführt und dann mit dem Flüssigkeitsauslass (13) in Verbindung gebracht werden.

6. Batteriepack gemäß einem der Ansprüche 1 bis 5, der ferner einen wärmeleitenden Strukturklebstoff (2), einen Bodenstrukturklebstoff (4) und eine Schale (5) umfasst, wobei die Flüssigkeitskühlplatte (1), der wärmeleitende Strukturklebstoff (2), der Batteriestapel (3), der Bodenstrukturklebstoff (4) und die Schale (5) nacheinander von oben nach unten gestapelt sind; und
die Schale (5) einen quadratischen Rahmen (51) umfasst, wobei eine linke Stirnseite des Batteriestapels (3) von einer Innenwand eines linken Rahmens des quadratischen Rahmens (51) durch eine Pufferschicht beabstandet ist, die in der Lage ist, die Ausdehnung des Batteriekerns (311) zu absorbieren, und eine rechte Stirnseite des Batteriestapels (3) von einer Innenwand eines rechten Rahmens des quadratischen Rahmens (51) durch eine Pufferschicht beabstandet ist, die in der Lage ist, die Ausdehnung des Batteriekerns (311) zu absorbieren.

7. Batteriepack gemäß Anspruch 6, wobei der wärmeleitende Strukturklebstoff (2) einen linken hochwärmeleitenden Strukturklebstoff (23), einen mittleren niedrigwärmeleitenden Strukturklebstoff (24) und einen rechten hochwärmeleitenden Strukturklebstoff (25) umfasst, die nacheinander in einer Links-Rechts-Richtung angeordnet sind, wobei der linke hochwärmeleitende Strukturklebstoff (23), der mittlere Strukturklebstoff (24) mit geringer Wärmeleitfähigkeit und der rechte Strukturklebstoff (25) mit hoher Wärmeleitfähigkeit zwischen der Oberseite des Batteriestapels (3) und einer Unterseite des Flüssigkeitskühlplattenkörpers (11) angebracht sind, und der Wärmeleitkoeffizient des mittleren Strukturklebstoffs (24) mit geringer Wärmeleitfähigkeit kleiner ist als der des linken Strukturklebstoffs (23) mit hoher Wärmeleitfähigkeit und des rechten Strukturklebstoffs (25) mit hoher Wärmeleitfähigkeit.

8. Batteriepack gemäß Anspruch 2, 3, 6 oder 7, der ferner umfasst: eine Wärmedämmschicht (6), die die Außenfläche des Fachs (5) umhüllt.

9. Batteriepack gemäß Anspruch 2, 3, 6 oder 7, wobei die Auftragsfläche des unteren Strukturklebstoffs (4) nicht größer ist als die Fläche einer Unterseite des Batteriestapels (3); und
der Bodenstrukturklebstoff (4) eine Vielzahl von voneinander beabstandeten Strukturklebstoffstreifen (41) umfasst.

10. Fahrzeug, umfassend: ein Batteriepack gemäß einem der Ansprüche 1 bis 9.

## Revendications

1. Bloc de batterie, comprenant : une plaque de refroidissement par liquide (1) et une pile de batteries (3), dans lequel la pile de batteries (3) comprend au moins un module de batterie (31) ; et
la plaque de refroidissement par liquide (1) comprend un corps de plaque de refroidissement par liquide (11), une entrée de liquide (12) et une sortie de liquide (13), dans lequel le corps de plaque de refroidissement par liquide (11) définit un circuit de refroidissement par liquide, le circuit de refroidissement par liquide comprend un canal d'entrée de liquide périphérique (111), un canal de collecte de liquide effluent (112) et un canal intermédiaire (113) communiquant entre le canal d'entrée de liquide périphérique (111) et le canal de collecte de liquide effluent (112) ; l'entrée de liquide (12) est reliée au corps de plaque de refroidissement par liquide (11) et communique avec le canal d'entrée de liquide périphérique (111) ; et la sortie de liquide (13) est reliée au corps de plaque de refroidissement par liquide (11) et communique avec le canal de collecte de liquide effluent (112) ;
dans lequel le canal d'entrée de liquide périphérique (111) entoure un bord du corps de plaque de refroidissement à liquide (11) et recouvre un bord d'une surface supérieure de la pile de batteries (3), et le canal intermédiaire (113) est situé à l'intérieur du canal d'entrée de liquide périphérique (111) et recouvre une zone centrale de la surface supérieure de la pile de batteries (3) ;
dans lequel le canal intermédiaire (113) comprend une pluralité de canaux de dérivation (1131), dans lequel une entrée (11311) de chacun des canaux de dérivation (1131) communique avec le canal d'entrée de liquide périphérique (111), et une sortie (11312) de chacun des canaux de dérivation (1131) communique avec le canal de collecte de liquide effluent (112) ; et les entrées (11311) de la pluralité de canaux de dérivation (1131) sont disposées à intervalles réguliers le long du canal d'entrée de liquide périphérique (111), et les sorties (11312) de la pluralité de canaux de dérivation (1131) sont disposées à intervalles réguliers le long du canal de collecte de liquide effluent (112) ; et
dans lequel : le module de batterie (31) comprend une pluralité de noyaux de batterie (311) empilés dans une direction avant-arrière d'un véhicule et la pluralité de canaux de dérivation (1131) s'étend dans la direction avant-arrière du véhicule ;
l'entrée de liquide (12) est reliée à un côté avant du corps de plaque de refroidissement par liquide (11) ; le canal d'entrée de liquide périphérique (111) est bifurqué à la position de l'entrée de liquide (12) pour former un canal d'entrée de liquide périphérique gauche (1111) et un canal d'entrée de liquide périphérique droit (1112), dans lequel les côtés arrière des canaux d'entrée de liquide périphériques gauche (1111) et droit (1112) communiquent avec les entrées (11311) de la pluralité de canaux de dérivation (1131) ; et le canal de collecte de liquide effluent (112) a un site à l'avant du corps de plaque de refroidissement par liquide (11) et est espacé du canal d'entrée de liquide périphérique (111) ; et
un liquide de refroidissement est divisé en deux après avoir été introduit par l'entrée de liquide (12), puis s'écoule à travers le canal d'entrée de liquide périphérique gauche (1111) et le canal d'entrée de liquide périphérique droit (1112) ; et le liquide de refroidissement est ensuite combiné à l'arrière du canal d'entrée de liquide périphérique gauche (1111) et du canal d'entrée de liquide périphérique droit (1112), puis s'écoule à travers la pluralité de canaux de dérivation (1131) dans le canal de collecte de liquide effluent (112), et s'écoule hors de la sortie de liquide (13).

2. Bloc de batterie selon la revendication 1, comprenant en outre un adhésif structurel thermoconducteur (2), un adhésif structurel inférieur (4) et un plateau (5), dans lequel la plaque de refroidissement par liquide (1), l'adhésif structurel thermoconducteur (2), la pile de batteries (3), l'adhésif structurel inférieur (4) et le plateau (5) sont empilés séquentiellement de haut en bas ; et
le plateau (5) comprend un cadre carré (51), une poutre anti-expansion avant (52) disposée sur un cadre avant du cadre carré (51), et une poutre anti-expansion arrière (53) disposée sur un cadre arrière du cadre carré (51), dans lequel une face d'extrémité avant de la pile de batteries (3) est espacée de la poutre anti-expansion avant (52) par une couche tampon capable d'absorber l'expansion du noyau de batterie (311) ; et une face d'extrémité arrière de la pile de batteries (3) est espacée de la poutre anti-expansion arrière (53) par une couche tampon capable d'absorber l'expansion du noyau de batterie (311).

3. Bloc de batterie selon la revendication 2, dans lequel l'adhésif structurel thermoconducteur (2) comprend un adhésif structurel à chemin d'écoulement avant (21) et un adhésif structurel à chemin d'écoulement arrière hautement thermoconducteur (22) disposés dans une direction avant-arrière, dans lequel l'adhésif structurel à chemin d'écoulement avant (21) et l'adhésif structurel hautement thermoconducteur à écoulement arrière (22) sont liés entre la surface supérieure de la pile de batterie (3) et une surface inférieure du corps de plaque de refroidissement par liquide (11) ; et le coefficient de conductivité thermique de l'adhésif structurel à écoulement avant (21) est inférieur à celui de l'adhésif structurel hautement thermoconducteur à écoulement arrière (22).

4. Bloc de batterie, comprenant : une plaque de refroidissement par liquide (1) et une pile de batteries (3), dans lequel la pile de batteries (3) comprend au moins un module de batterie (31) ; et
la plaque de refroidissement par liquide (1) comprend un corps de plaque de refroidissement par liquide (11), une entrée de liquide (12) et une sortie de liquide d' t (13), dans lequel le corps de plaque de refroidissement par liquide (11) définit un circuit de refroidissement par liquide, le circuit de refroidissement par liquide comprend un canal d'entrée de liquide périphérique (111), un canal de collecte de liquide effluent (112) et un canal intermédiaire (113) communiquant entre le canal d'entrée de liquide périphérique (111) et le canal de collecte de liquide effluent (112) ; l'entrée de liquide (12) est raccordée au corps de plaque de refroidissement par liquide (11) et communique avec le canal d'entrée de liquide périphérique (111) ; et la sortie de liquide (13) est raccordée au corps de plaque de refroidissement par liquide (11) et communique avec le canal de collecte de liquide effluent (112) ;
dans lequel le canal d'entrée de liquide périphérique (111) entoure un bord du corps de la plaque de refroidissement par liquide (11) et recouvre un bord d'une surface supérieure de la pile de batteries (3), et le canal intermédiaire (113) est situé à l'intérieur du canal d'entrée de liquide périphérique (111) et recouvre une zone centrale de la surface supérieure de la pile de batteries (3) ;
dans lequel le canal intermédiaire (113) comprend une pluralité de canaux de dérivation (1131), dans lequel une entrée (11311) de chacun des canaux de dérivation (1131) communique avec le canal d'entrée de liquide périphérique (111), et une sortie (11312) de chacun des canaux de dérivation (1131) communique avec le canal de collecte de liquide effluent (112) ; et les entrées (11311) de la pluralité de canaux de dérivation (1131) sont disposées à intervalles réguliers le long du canal d'entrée de liquide périphérique (111), et les sorties (11312) de la pluralité de canaux de dérivation (1131) sont disposées à intervalles réguliers le long du canal de collecte de liquide effluent (112) ; et
dans lequel : le module de batterie (31) comprend une pluralité de noyaux de batterie (311) empilés dans une direction gauche-droite d'un véhicule, et la pluralité de canaux de dérivation (1131) s'étend dans la direction gauche-droite du véhicule ;
l'entrée de liquide (12) est reliée à une face avant du corps de plaque de refroidissement par liquide (11) ; le canal d'entrée de liquide périphérique (111) est bifurqué à la position de l'entrée de liquide (12) pour former un canal d'entrée de liquide périphérique gauche (1111) et un canal d'entrée de liquide périphérique droit (1112), dans lequel une section gauche du canal d'entrée de liquide périphérique gauche (1111) communique avec les entrées d'une pluralité de canaux de dérivation (1131) sur un côté gauche, et une section droite du canal d'entrée de liquide périphérique droit (1112) communique avec les entrées d'une pluralité de canaux de dérivation (1131) sur un côté droit ; et le canal de collecte de liquide effluent (112) a un site central dans le corps de plaque de refroidissement par liquide (11) dans une direction avant-arrière et est espacé du canal d'entrée de liquide périphérique (111) ; et
un liquide de refroidissement est bifurqué après avoir été alimenté via l'entrée de liquide (12), puis s'écoule à travers le canal d'entrée de liquide périphérique gauche (1111) et le canal d'entrée de liquide périphérique droit (1112) ; et le liquide de refroidissement d' s s'écoule ensuite à travers la pluralité de canaux de dérivation (1131) situés sur les côtés gauche et droit dans le canal de collecte de liquide effluent (112), et s'écoule hors de la sortie de liquide (13).

5. Bloc de batterie selon la revendication 4, dans lequel : le canal de dérivation est sinueux, et le canal de collecte de liquide effluent (112) est divisé en un canal de collecte de liquide effluent gauche (1121) et un canal de collecte de liquide effluent droit (1122) par une plaque rigidifiée (14), dans lequel les sorties de la pluralité de canaux de dérivation (1131) du côté gauche communiquent avec le canal de collecte de liquide effluent gauche (1121), et les sorties de la pluralité de canaux de dérivation (1131) du côté droit communiquent avec le canal de collecte de liquide effluent droit (1122) ; et le canal de collecte de liquide effluent gauche (1121) et le canal de collecte de liquide effluent droit (1122) sont combinés à l'avant du corps de plaque de refroidissement par liquide (11), puis mis en communication avec la sortie de liquide (13).

6. Bloc de batterie selon l'une quelconque des revendications 1 à 5, comprenant en outre un adhésif structurel thermoconducteur (2), un adhésif structurel inférieur (4) et un plateau (5), dans lequel la plaque de refroidissement par liquide (1), l'adhésif structurel thermoconducteur (2), la pile de batteries (3), l'adhésif structurel inférieur (4) et le plateau (5) sont empilés séquentiellement de haut en bas ; et
le plateau (5) comprend un cadre carré (51), dans lequel une face d'extrémité gauche de la pile de batteries (3) est espacée d'une paroi intérieure d'un cadre gauche du cadre carré (51) par une couche tampon capable d'absorber la dilatation du noyau de batterie (311), et une face d'extrémité droite de la pile de batteries (3) est espacée d'une paroi intérieure d'un cadre droit du cadre carré (51)par une couche tampon capable d'absorber l'expansion du noyau de batterie (311).

7. Bloc de batterie selon la revendication 6, dans lequel l'adhésif structurel thermoconducteur (2) comprend un adhésif structurel hautement thermoconducteur gauche (23), un adhésif structurel faiblement thermoconducteur intermédiaire (24) et un adhésif structurel hautement thermoconducteur droit (25) disposés séquentiellement dans une direction gauche-droite, dans lequel l'adhésif structurel hautement thermoconducteur gauche (23), l'adhésif structurel intermédiaire à faible conductivité thermique (24) et l'adhésif structurel droit à haute conductivité thermique (25) sont collés entre la surface supérieure de la pile de batteries (3) et une surface inférieure du corps de plaque de refroidissement par liquide (11), et le coefficient de conductivité thermique de l'adhésif structurel intermédiaire à faible conductivité thermique (24) est inférieur à celui de l'adhésif structurel gauche à haute conductivité thermique (23) et de l'adhésif structurel droit à haute conductivité thermique (25).

8. Bloc de batterie selon la revendication 2, 3, 6 ou 7, comprenant en outre : une couche de conservation de la chaleur (6) enveloppant une surface extérieure du plateau (5).

9. Bloc de batterie selon la revendication 2, 3, 6 ou 7, dans lequel la zone d'application de l'adhésif structurel inférieur (4) n'est pas supérieure à la surface inférieure de la pile de batteries (3) ; et
l'adhésif structurel inférieur (4) comprend une pluralité de bandes adhésives structurelles (41) espacées les unes des autres.

10. Véhicule, comprenant : un bloc de batterie selon l'une quelconque des revendications 1 à 9.
